# EUROPÄISCHE PATENTSCHRIFT

(11) **EP 0 741 669 B1**
(45) Veröffentlichungstag und Bekanntmachung des Hinweises auf die Patenterteilung: **25.11.1998**
(21) Anmeldenummer: 95909620.7
(22) Anmeldetag: 03.02.1995
(51) Int. Cl.: C02F 1/14, B01D 3/00

(54) **VERFAHREN UND VORRICHTUNG ZUR THERMISCHEN TRENNUNG VON FLÜSSIGKEITSKOMPONENTEN**
PROCESS AND DEVICE FOR THERMALLY SEPARATING COMPONENTS OF A LIQUID
PROCEDE ET DISPOSITIF POUR LA SEPARATION THERMIQUE DE COMPOSANTS D'UN LIQUIDE

(30) Priorität: 05.02.1994 DE 4403592
(43) Veröffentlichungstag der Anmeldung: 13.11.1996
(73) Patentinhaber: FORSCHUNGSZENTRUM JÜLICH GMBH, 52425 Jülich (DE)
(72) Erfinder: BILANOVIC, Dragoljub, 32000 Haifa (IL); DÖRING, Klaus, D-52372 Kreuzau (DE); MOHN, Friedrich-Helmuth, D-52372 Kreuzau (DE); STRADAL, Karl-Alfred, D-52379 Langerwehe (DE)
(86) Internationale Anmeldenummer: DE9500141
(87) Internationale Veröffentlichungsnummer: WO9521130

(56) Entgegenhaltungen:
- WO-A-85/04159
- DE-A- 3 618 279
- US-A- 4 318 781
- US-A- 4 363 703
- US-A- 4 487 659

## Beschreibung

Die Erfindung bezieht sich auf ein Verfahren zur thermischen Trennung von unterschiedlich flüchtigen Komponenten einer Flüssigkeit durch Aufheizen der Flüssigkeit bis zur Verdunstung der leichter flüchtigen Komponente, durch Abzug des bei der Verdunstung gebildeten Komponentendampfes und dessen anschließender Kondensation zur Ausbildung von Komponentenkondensat. Gegenstand der Erfindung ist auch eine Vorrichtung zur Durchführung des Verfahrens.

Verfahren dieser Art sind bekannt. So werden beispielsweise zur Meerwasserentsalzung in "Advances in Solar Energy Technology", Proceedings of the Biennial Congress of the International Solar Energy Society, Hamburg, 1987, edited by W.H. Bloss und F. Pfisterer, Pergamon Press, dort in Veröffentlichungen von O. St. C. Headley und I.A. McDoom "Producing distilled water with solar stills", S. 2804 ff, sowie von 0. Heschl und R. Sizmann "Solar sea water desalination with a high efficiency multi effect solar still", S. 2814 ff, sowie in DE 36 18 279 Al thermische Verfahren beschrieben, bei denen durch Nutzung von Solarenergie aus Meerwasser destilliertes Wasser gewonnen wird. Aus der zuletzt genannten Veröffentlichung ist es bekannt, das Meerwasser unter Ausbildung von Sole zu verdunsten und den bei der Verdunstung gebildeten Kondensatdampf mit Luft als Trägergas aus dem Verdunstungsraum zu einem Kondensator abzuführen. Am Kondensator, der zur Kühlung von Meerwasser vor dessen Eintritt in den Verdunstungsraum durchströmt wird, wird als Kondensat entsalztes Wasser gewonnen. Nachteilig ist, daß zur Verdunstung in den vorgenannten Fällen pro erzeugte Mengeneinheit Kondensat große Verdunstungs- und Kondensatorflächen und zur Förderung und Regelung erheblicher Anlagenaufwand benötigt werden.

US-A-4 363 703 Offenbart ein Verfahren und eine Vorrichtung zum Entsalzen von wasser mittels Solarenergie, wobei der erzeugte Dampf mittels eines Trägergases abgeführt und anschließend abgekühlt wird.

Aufgabe der Erfindung ist es, ein Verfahren zur thermischen Trennung flüchtiger Komponenten von Flüssigkeiten zu schaffen, das bei geringem Flächenbedarf eine einfache apparative Gestaltung erlaubt.

Diese Aufgabe wird bei einem Verfahren der eingangs genannten Art durch die im Patentanspruch 1 angegebenen Merkmale gelöst. Danach werden Teilmengen der Flüssigkeit auf einer zur Aufnahme der Teilmengen geeigneten Oberfläche verteilt, von der die jeweils leichter flüchtige Flüssigkeitskomponente beim Erwärmen der Oberfläche verdunsten kann. Der gebildete Komponentendampf wird in konventioneller Weise in Kontakt mit Kondensat niedergeschlagen, wobei als Kühlmittel für die Kühlflächen die Flüssigkeit dient. Der Transport des Komponentendampfes zwischen Verdunstungsraum und Kondensatoberfläche erfolgt mittels eines Trägergases. Das Trägergas wird vor Aufnahme des Komponentendampfes auf den thermischen Zustand des Komponentendampfes gebracht. Zum Aufheizen des Trägergases wird insbesondere bei Nutzung des Verfahrens zur Meerwasserentsalzung Solarenergie genutzt. Vorteilhaft ist es, das Trägergas im Kreislauf zuführen.

Bevorzugt wird die Teilmenge der Flüssigkeit auf einer die Flüssigkeit auf saugenden Oberfläche verdunstet, Patentanspruch 2. Oberflächen, die für die Flüssigkeit saugfähig sind, transportieren die zu trennende Flüssigkeit selbsttätig. Sie bieten zugleich eine Oberflächenstruktur an, die das Verdunsten der Flüssigkeit begünstigt und pro Oberflächeneinheit die zersetzbare Flüssigkeitsmenge erhöht. In einfacher Weise läßt sich so durch Einstellen der Oberflächentemperatur ein sich selbstätig regulierendes Gleichgewicht zwischen erzeugtem Komponentendampf und zur Oberfläche angesaugter Flüssigkeitsmenge einstellen, was wegen des dabei konstant bleibenden Feuchtigkeitsgrades an der Oberfläche die Verfahrensführung erleichtert.

Für die saugfähige Oberfläche wird bevorzugt eine Oberfläche mit faserartiger Struktur eingesetzt, Patentanspruch 3. Insbesondere sind Textilmaterial, saugfähiges Papier oder Pappe, Sintermaterialien, wie Keramikplatten, oder poröse Kunststoffe geeignet.

Es kommt darauf an, den verdunsteten Komponentendampf ohne Veränderung dessen thermischen Zustands in das Trägergas aufzunehmen, insbesondere ist eine Rückkühlung des Komponentendampfes zu vermeiden, um die erreichte Dampfbildung nicht rückgängig zu machen. Von Bedeutung ist es somit, das Trägergas bereits vor Eintritt in den Verdunstungsraum auf die Temperatur des Komponentendampfes zu erwärmen, Patentanspruch 6.

Eine geeignete Vorrichtung zur Durchführung des Verfahrens ist in Patentanspruch 5 und den folgenden Patentansprüchen 6 bis 14 angegeben. Dabei wird von einer Vorrichtung mit Aufheizung der Flüssigkeit bis zum Verdunsten ausgegangen. Die Vorrichtung ist für den bei der Verdunstung gebildeten Komponentendampf mit einem Dampfabzug ausgerüstet, der in einer Kondensationskammer mündet, in der der Komponentendampf kondensiert und Kondensat gewonnen wird. Der Dampfabzug mündet im Kondensatspeicher so, daß der Komponentendampf in Kontakt mit Komponentenkondensat und Kühlflächen kondensiert, denen die Flüssigkeit, von der eine Teilmenge verdunstet wird, als Kühlmittel dient.

Zur Aufnahme der zu verdunstenden Teilmenge der Flüssigkeit ist eine unter Ausnutzung von Solarenergie erwärmbare Oberfläche vorgesehen, die in einem zum Transport des Komponentendampfes vom Trägergas durchströmten Verdunstungsraum angeordnet ist.

Zur Rückführung des Trägergases ist am Trägergasabzug eine Rückführleitung angeschlossen, die am Trägergaseinlaß mündet.

Bevorzugt ist eine für die Flüssigkeit saugfähige Oberfläche eingesetzt. Als saugfähiges Material wird vor allem ein faserartig strukturiertes Material verwendet. Geeignet sind auch benetzbare poröse Materialien, wie gesinterte Keramik oder poröse Kunststoffplatten. Das Material ist insbesondere zur Aufheizung durch Solarenergie geeignet.

Zweckmäßig weist der Verdunstungsraum mehrere benachbart und parallel zueinander angeordnete Verdunstungsflächen auf, zwischen denen sich Strömungsräume für das den gebildeten Komponentendampf abführende Trägergas befinden. Die Strömung kann mittels Gebläse unterstützt werden.

Ein Teil der Flüssigkeit, die zur Kühlung die Kühlflächen der Kondensationskammer durchströmt, dient anschließend zur Vorkühlung des Trägergases vor dessen Eintritt in die Kondensatkammer.

In der Rückführleitung ist ein Wärmetauscher eingesetzt, der von einem Teil der den Kondensator kühlenden Flüssigkeit durchströmt wird.

Das erfindungsgemäße Verfahren und die Vorrichtung erfahren eine wichtige Anwendung bei der Trinkwassererzeugung aus Salzwasser, Patentanspruch 13. Inbesondere kann aus Meerwasser Trinkwasser gewonnen werden.

Das erfindungsgemäße Verfahren und die Vorrichtung werden nachfolgend anhand eines Ausführungsbeispiels näher erläutert. Die Zeichnung zeigt im einzelnen:
- Fig. 1:: Vorrichtung zur Erzeugung von Frischwasser aus Salzwasser (Längsschnitt);
- Fig. 2:: Teilschnitt des Verdunstungsraums der Vorrichtung nach Fig. 1

Die Zeichnung zeigt in schematischer Darstellung eine Vorrichtung zur Entsalzung von Salzwasser und Erzeugung von Frischwasser. Aus dem Salzwasser wird das Frischwasser als leichter flüchtige Komponente thermisch abgetrennt. Zur Aufheizung der Vorrichtung wird Solarenergie genutzt.

Das Ausführungsbeispiel ist analog übertragbar auf thermische Trennverfahren für andere Flüssigkeiten, die unterschiedlich flüchtige Komponenten aufweisen. Das Verfahren kann beispielsweise zur Flüssigkeitsreinigung, insbesondere Wasserreinigung oder zur Anreicherung einer schwerer flüchtigen Komponente in der Flüssigkeit, aber auch - bei vollständiger Verdunstung der verdampfbaren Flüssigkeitskomponence - zur Erzeugung von Feststoffschichten, insbesondere von Salzschichten auf Materialbahnen, eingesetzt werden.

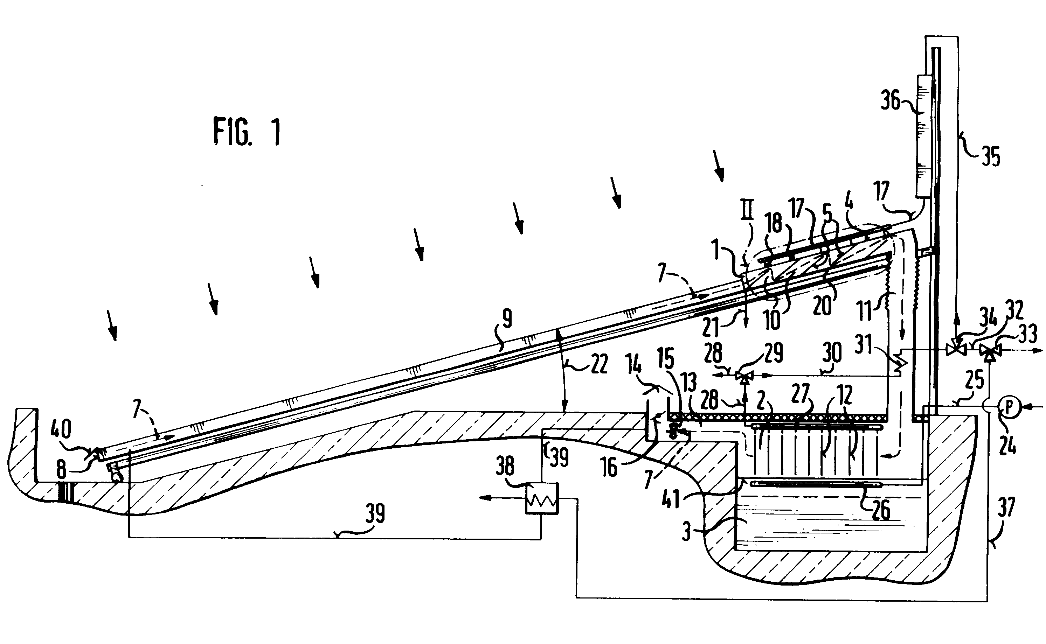

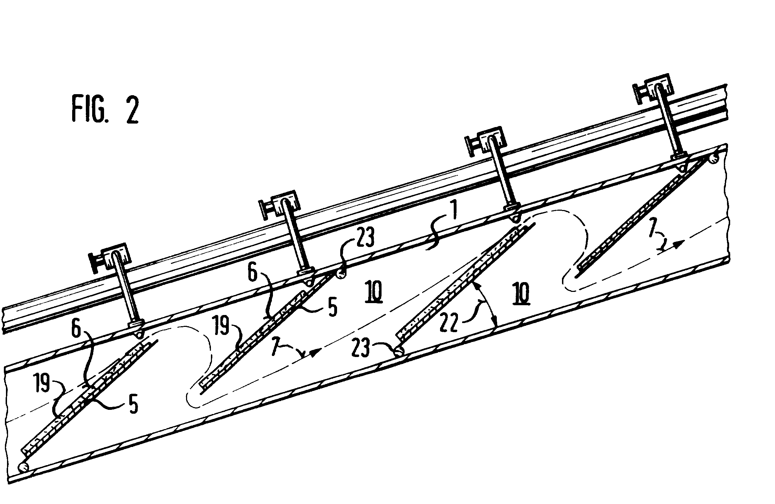

Bei der in Fig. 1 schematisch dargestellten Vorrichtung ist ein Verdunstungsraum 1 für die Flüssigkeit zur Verdunstung ihrer leichter flüchtigen Komponente und zur Ausbildung von Komponentendampf vorgesehen und unterhalb des Verdunstungsraums eine Kondensatkammer 2 zum Niederschlagen des Kondensatdampfes und zur Speicherung des Komponentenkondensats in einem Kondensatspeicher 3 angeordnet. Der Verdunstungsraum 1 ist mit für Wärmestrahlen durchlässigem Glas oder Kunstglas als transparenter Abdeckung 4 nach oben abgeschlossen und wird mittels Solarenergie aufgeheizt. Verdunsterplatten 5, die die Oberflächen 6 ausbilden, auf denen die Verdunstung von Teilmengen der Flüssigkeit stattfindet (s. hierzu Figur 2), sind im Verdunstungsraum 1 so eingesetzt, daß sie von Solarenergie erhitzt werden. Die Verdunsterplatten 5 befinden sich innerhalb einer vom Trägergas 7 gebildeten Strömung.

Als Trägergas 7 wird im Ausführungsbeispiel Luft verwendet. In Fig. 1 sind schematisch Strömungslinien für das Trägergas 7 im Verdunstungsraum 1 und in der Kondensatkammer 2 eingezeichnet. Das Trägergas strömt über einen Trägergaseinlaß 8 in einen als Vorwärmkammer 9 dienenden Trägergaskanal ein. Die Vorwärmkammer 9 wird in gleicher Weise wie die Verdunsterplatte 5 von Solarenergie erwärmt, wobei die entstehende Wärme an das durch die Vorwärmkammer strömende Trägergas übertragen wird. Im Verdunstungsraum 1 durchströmt das heiße Trägergas Zwischenräume 10 zwischen den mit Abstand zueinander benachbart und planparallel angeordneten Verdunsterplatten 5. Das Trägergas nimmt den gebildeten Komponentendampf auf und wird über einen am Ende des Verdunstungsraums 1 angeschlossenen Dampfabzug 11 in die Kondensatkammer 2 eingeführt. In der Kondensatkammer 2 strömt das Trägergas 7 zwischen Kühlflächen 12 hindurch, die derart angeordnet sind, daß für das feuchte Trägergas ein mäanderförmiger Strömungspfad ausgebildet ist, und gelangt über einen Trägergasabzug 13 zum Trägergasausgang 14. Im Trägergasabzug 13 befindet sich im Ausführungsbeispiel ein Sauggebläse 15, das den Trägergastransport vom Trägergaseinlaß 8 bis zum Trägergasausgang 14 bewirkt. Zur Regelung der Trägergasmenge ist im Trägergasabzug 13 eine Regelklappe 16 eingesetzt, die in Figur 1 nur schematisch angegeben ist.

Im Ausführungsbeispiel werden die Verdunsterplatten 5 aus einem Zulauf 17 für Salzwasser benetzt. Der Zulauf 17 ist oberhalb der Verdunstungsplatten 5 als Sprinkleranlage ausgebildet und weist für jede der Verdunstungsplatten 5 einen Flüssigkeitsverteiler 18 auf. Die Verdunstungsplatten 5 sind im Ausführungsbeispiel hochabsorptionsfähig für Solarenergie. Sie weisen eine wellige Oberfläche mit glatter Struktur auf oder bestehen aus einem Material mit saugfähiger Oberfläche, im Ausführungsbeispiel sind sie mit Kunststoffschwamm 19 belegt, siehe Fig. 2. Es wird so für die Verdunstung eine pro Flächeneinheit große Verdunstungsoberfläche zur Verfügung gestellt, die von Solarenergie optimal aufheizbar ist.

Unter den Verdunstungsplatten 5 ist eine Flüssigkeitsablaufwanne 20 angeordnet, in der nicht verdunstete Flüssigkeit, im Ausführungsbeispiel an Salz angereicherte Sole, aufgefangen und zu einem in Figur 1 dargestellten Auslauf 21 ablaufen kann.

In Figur 2 ist ein Teilschnitt des Verdunstungsraumes 1 der Wasserentsalzungsanlage nach Figur 1 wiedergegeben. Die Verdunstungsplatten 5 sowie der Kunststoffschwamm 19 sind mittels Solarenergie aufheizbar, wobei die zur Verdunstung der leichter flüchtigen Komponente der Flüssigkeit dienende Oberfläche 6 des Kunststoffschwamms direkt dem Sonnenlicht ausgesetzt ist. Die Verdunstungsplatten 5 sind zur Strahlenabsorption innerhalb des Verdunstungsraums 1 in einem derart eingestellten Winkel 22 angeordnet, daß sich während der Sonneneinstrahlung eine optimale Erwärmung der wirksamen Verdunstungsoberflächen 6 ergibt. Die Verdunstungsplatten 5 sind im Ausführungsbeispiel an Halterungen 23 befestigt, über die die Verdunstungsplatten 5 zur Änderung des Einstrahlungswinkels 22 verdrehbar sind.

Die leichter flüchtige Komponente der Flüssigkeit verdunstet auf der Oberfläche 6 der mit Kunststoffschwamm 19 ausgestatteten Verdunsterplatten 5. Der dabei gebildete Komponentendampf in den Zwischenräumen 10 zwischen den planparallel angeordneten Verdunsterplatten wird von der Luft als Trägergas 7 aufgenommen und mit dem Trägergas aus dem Verdunstungsraum 1 über den Dampfabzug 11 in die Kondensatkammer 2 transportiert. Hier kommt der Komponentendampf mit den Kühlflächen 12 und dem auf den Kühlflächen 12 gebildeten Komponentenkondensat sowie dem zum Kondensatspeicher 3 ablaufenden Kondensat in Kontakt und kondensiert infolge der niedrigen Temperatur des Kondensats und der Kühlflächen, deren Temperatur unterhalb der Kondensationstemperatur des Komponentendampfes liegt. Kühlmittel für die Kühlflächen 12 ist im Ausführungsbeispiel das Salzwasser, das von einer Salzwasserpumpe 24 angesaugt wird und über eine Rohrleitung 25 zur Kondensatkammer 2 geführt wird. Um eine entsprechende Kühlung zu erreichen, wird kühles Meerwasser aus tieferen Meeresschichten angesaugt. Das Meerwasser strömt zunächst in einen Verteiler 26 und anschließend durch die Kühlflächen 12 der Kondensatkammer 2.

Von den Kühlflächen 12 fließt das Salzwasser über ein Sammelrohr 27 ab und wird in einer Abflußleitung 28 abgeführt. Ein Teil des abfließenden Salzwassers dient zur Vorkühlung des vom Verdunstungsraum 1 abströmenden Trägergases 7. Über ein Dreiwegeventil 29 und eine Zweigleitung 30 wird dieser Teil des Salzwassers durch einen Vorkühler 31 geführt, der innerhalb des Dampfabzugs 11 angeordnet ist. Vom Vorkühler 31 führt ein Kühlmittelabfluß 32 den Hauptteil des Salzwassers ab, dieser Teil des Meerwassers fließt ins Meer zurück, soweit dessen Restwärme durch entsprechende Einstellung eines im Kühlmittelabfluß eingesetzten Dreiwegeventils 33 nicht noch weiter genutzt werden soll, wie als weitere Variante des erfindungsgemäßen Verfahrens noch erläutert werden wird. Aus einem geringen Anteil der zur Kühlung der Kühlflächen 12 erforderlichen Meerwassermenge wird nach Durchströmen des Vorkühlers 31 entsalztes Wasser, bevorzugt Trinkwasser erzeugt. Hierzu führt eine an einem weiteren Dreiwegeventil 34 angeschlossene Salzwasserleitung 35 zu einem Salzwasservorwärmer 36, an dem der Zulauf 17 mit Sprinkleranlage angeschlossen ist. Die Vorwärmung des Salzwassers im Salzwasservorwärmer 36 erfolgt im Ausführungsbeispiel mit Solarenergie.

Bei einer Variante des erfindungsgemäßen Verfahrens wird - wie bereits erwähnt - die Restwärme des vom Vorkühler 31 abströmenden Meerwassers noch weiter ausgenutzt, im Ausführungsbeispiel zur Einstellung der Temperatur von im Kreislauf zurückgeführtem Trägergas. Bei entsprechender Einstellung des Dreiwegeventils 33 wird das Meerwasser über eine Abflußleitung 37 zu einem Wärmetauscher 38 geführt, der von Trägergas durchströmt wird, das bei entsprechender Einstellung der Regelklappe 16 vom Sauggebläse 15 aus dem Trägergasabzug 13 in einer Rückführleitung 39 zur Vorwärmkammer 9 zurückgeführt wird. Die Rückführleitung 39 mündet am Trägergaseinlaß 8 in die Vorwärmkammer 9. Der Trägergaseinlaß 8 ist mit einer Klapppe 40 verschließbar, so daß das Trägergas in geschlossenem Kreislauf zirkuliert. Die Klappe 40 und die Regelklappe 16 im Trägergasabzug 13 können aufeinander abgestimmt gesteuert werden. Das Sauggebläse 15 im Trägergasabzug 13 sorgt für den auf diese Weise erzeugten Trägergas-Kreislauf. Im Ausführungsbeispiel wird die als Trägergas verwendete Luft im Wärmeaustauscher 38 auf eine Lufttemperatur von zumindest 25°C oder höher eingestellt.

Im Ausführungsbeispiel wird davon ausgegangen, daß die als Trägergas verwendete Luft bei einem Luftdurchsatz von 0,125 m³/sec in der Vorwärmkammer 9 durch Solarenergie von 25°C Eintrittstemperatur am Trägergaseinlaß 8 bis auf 64°C vor Eintritt in den Verdunstungsraum erhitzt wird. Dabei wird von einer im Jahresdurchschnitt zur Verfügung stehenden Solarstrahlung von 1 KW/m² ausgegangen, zur Lufterwärmung werden in der Vorwärmkammer deshalb 5m² Solarkollektorfläche zur Verfügung gestellt. Der bei dieser Auslegung bei 64°C erreichte Wärmeinhalt der Luft wird zur Wasserverdunstung genutzt. Der Strömungsquerschnitt in der Vorwärmkammer 9 beträgt 0,125 m², so daß sich eine Strömungsgeschwindigkeit für die Luft als Trägergas von 1 m/sec ergibt.

Im Verdunstungsraum 1 wird die aufgeheizte Luft zu Beginn ihres Kreislaufs als Trägergas mit Komponentendampf, im Ausführungsbeispiel Wasserdampf bis auf 21 % relative Luftfeuchte angereichert. Nach Wirksamwerden des Wasser-Luft-Wärmetauschers 38 und Aufheizung der Luft erhöht sich die relative Feuchte der aus dem Verdunstungsraum 1 austretenden Luft auf 47 %. Das Meerwasser wird zu seiner Verdunstung im Salzwasservorwärmer 36 bis auf 50°C und höher aufgeheizt. Es wird mit dieser Temperatur auf die Verdunsterplatten 5 aufgegeben, so daß von den Verdunsterplatten nur noch die für die Verdunstung des Meerwassers bei 50°C notwendige Verdunstungsenergie (Verdampfungsenergie) zu liefern ist. Die Verdunstungsplatten weisen hierzu eine sonnenbestrahlte aktive Oberfläche von 1,5 m² auf, bei einer Solarstrahlung von 1 KW/m² im Jahresdurchschnitt stehen somit 1,5 KW zur Wasserverdunstung zur Verfügung.

Bei einem Durchsatz von 0,125 m³/sec Luft können bei 100 % relativer Luftfeuchte ca. 10 g/sec Wasser transportiert werden. Im Ausführungsbeispiel werden zunächst 2,1 g/sec Wasser mit dem Luftstrom als Trägergas transportiert. Das sind 21 % relative Luftfeuchte. Die aus der Kondensatkammer 2 austretende Luft mit einer Temperatur von 25°C hat eine relative Luftfeuchte von 100 % bzw. einen Wassergehalt von ca. 20,8 g/m³ Luft. Dies sind im Ausführungsbeispiel somit ca. 2,6 g/sec Wasser. Die ausgeführte Anlage läuft also im Dampfabzug 11 zwischen Verdunstungsraum 1 und Kondensatkammer 2 mit einer relativen Luftfeuchte von 47,3 %. Die Temperaturen und Feuchtigkeitgehalte lassen sich bei im Kreislauf geführter Luft mit nur geringen Abweichungen einhalten.

Das auf diese Weise im Verdunstungsraum 1 befeuchtete Trägergas wird in der Kondensatkammer 2 an den Kühlflächen 12 unter Kontakt mit bereits gebildetem Komponentenkondensat wieder getrocknet. In der Kondensatkammer 2 sind im Ausführungsbeispiel 10 Kühlflächen von je ca. 100 x 25 cm² Oberfläche eingesetzt. Die Kühlflächen 12 sind in der Kondensatkammer 2 derart angeordnet, daß das befeuchtete Trägergas 7 die Kondensatkammer auf mäanderförmigem Strömungsweg durchströmt. Die Temperatur der Kühlfächen 12 und damit die Temperatur des Kondensats, mit dem das befeuchtete Trägergas in Berührung kommt, beträgt im Ausführungsbeispiel maximal 25°C. Nach Niederschlag des Komponentendampfes strömt die Luft wieder als "trockenes" Trägergas aus der Kondensatkammer 2 mit ca. 25°C ab und kann über die Rückführleitung 39 im Kreislauf zur Vorwärmkammer 9 zurückgeführt werden.

In der Kondensatkammer 2 werden im Ausführungsbeispiel ca. 8 l/h entsalztes Wasser, insbesondere Trinkwasser als Komponentenkondensat gewonnen. Das Wasser fließt an den Kühlflächen 12 zum Boden 41 der Kondensatkammer 2 und wird von dort zum Kondensatspeicher 3 geleitet.

Gemäß Wärmebilanz ergibt sich folgendes:

| Wärmemenge Q: | |
|---|---|
| - Überschußwärme bei Lufttemp. 64°C (Überschußwärme > 50°C Lufttemp.) = | 1,5 KW |
| - Wärme aus bestrahlter Verdunstungsfläche 1,5 m² bei 1 kW/m² Solarstrahlung m² bei | 1,5 KW |
| - Wärmerückgewinn im Vorkühler 31 | 1,0 KW |
| - Wärmerückgewinn im Salzwasservorwärmer 36 | 1,0 KW |
| Wärmenge Q insgesamt = | 5,0 KW |

Mit 5 KW können 2,1 g/sec Wasser erzeugt werden. Dies entspricht einer Wassermenge von 7,2 l/h. Durch die zusätzlich im Wärmetauscher 38 zurückgewonnene Wärmemenge kann die erzeugte Frischwassermenge bei im Kreislauf geführter Luft als Trägergas noch auf 8 l/h Wasser gesteigert werden. Eine weitere Steigerung für die produzierbare Wassermenge ergibt sich bei einer Vergrößerung der Verdunstungsfläche. Wird die Verdunstungsfläche gegenüber dem Ausführungsbeispiel verdoppelt, so kann die erzeugte Wassermenge um 30 %, d.h. von 8 l/h auf ca. 10 l/h erhöht werden.

### Stückliste

Verdunstungsraum 1
Kondensatkammer 2
Kondensatspeicher 3
Abdeckung 4
Verdunsterplatten 5, 5a
Oberflächen 6
Trägergas 7
Trägergaseinlaß 8
Vorwärmkammer 9
Zwischenraum 10
Dampfabzug 11
Kühlflächen 12
Trägergasabzug 13
Trägergasausgang 14
Sauggebläse 15
Regelklappe 16
Zulauf 17
Flüssigkeitsverteiler 18
Kunststoffschwamm 19
Flüssigkeitsablaufwanne 20
Auslauf 21
Einstrahlungswinkel 22
Halterungen 23
Salzwasserpumpe 24
Rohrleitung 25
Verteiler 26
Sammelrohr 27
Abflußleitung 28
Dreiwegeventil 29
Zweigleitung 30
Vorkühler 31
Kühlmittelabfluß 32
Dreiwegeventile 33, 34
Salzwasserleitung 35
Salzwasservorwärmer 36
Abflußleitung 37
Wärmetauscher 38
Rückführleitung 39
Klappe 40
Boden 41

## Patentansprüche

1. Verfahren zur thermischen Trennung von unterschiedlich flüchtigen Komponenten einer Flüssigkeit durch Aufheizung der Flüssigkeit bis zur Verdunstung der leichter flüchtigen Komponente,
- wobei bei der Verdunstung gebildeter Komponentendampf mittels eines Trägergases abgeführt wird, das vor Aufnahme des Komponentendampfes durch Aufheizen des Trägergases mittels Solarenergie auf den thermischen Zustand des Komponentendampfes gebracht worden ist,
- wobei zur anschließenden Kondensation und Ausbildung von Komponentenkondensat der im Trägergas enthaltene Komponentendampf in Kontakt mit Komponentenkondensat und Kühlflächen niederschlagen wird, die von der Flüssigkeit gekühlt werden,
- wobei nach Kühlung der Kühlflächen eine Teilmenge der Flüssigkeit auf einer die Teilmenge aufnehmenden, zur Verdunstung der leichter flüchtigen Flüssigkeitskomponente unter Ausnutzung von Solarenergie erwärmten Oberfläche verteilt wird, und
- wobei das Trägergas im Kreislauf geführt wird.

2. Verfahren nach Anspruch 1,
**dadurch gekennzeichnet,**
daß die Teilmenge der Flüssigkeit auf einer die Flüssigkeit aufsaugenden Oberfläche verdunstet wird.

3. Verfahren nach Anspruch 2,
**dadurch gekennzeichnet,**
daß die Oberfläche eine faserartige Struktur aufweist.

4. Verfahren nach einem der Ansprüche 1, 2 oder 3,
**dadurch gekennzeichnet,**
daß das Trägergas vor Zutritt zum Verdunstungsraum auf Komponentendampftemperatur erhitzt wird.

5. Vorrichtung zur thermischen Abtrennung von unterschiedlich flüchtigen Komponenten einer Flüssigkeit durch Aufheizen der Flüssigkeit bis zum Verdunsten der leichter flüchtigen Komponente, mit einem Dampfabzug (11) für beim Verdunsten gebildeten Komponentendampf und mit einer nachgeschalteten Kondensatkammer (2) zum Speichern von aus dem Komponentendampf gewonnenen Komponentenkondensat, wobei zur Gewinnung des Komponentenkondensats in der Kondensatkammer (2) Kühlflächen (12) angeordnet sind, die von der Flüssigkeit gekühlt werden, von der eine Teilmenge anschließend verdunstet wird, und wobei zur Aufnahme der Teilmenge der Flüssigkeit eine unter Ausnutzung von Solarenergie erwärmbare Oberfläche (6) vorgesehen ist, die zum Komponentendampf-Transport in einem von Trägergas (7) durchströmten Verdunstungsraum (1) angeordnet ist, wobei dem Verdunstungsraum (1) eine vom Trägergas durchströmte, von Solarenergie erhitzte Vorwärmkammer (9) für das Trägergas vorgeschaltet ist, wobei der Dampfabzug (11) in der Kondensatkammer (2) derart mündet, daß der im Trägergas enthaltende Komponentendampf mit den Kühlflächen (12) und mit auf den Kühlflächen gebildeten Komponentenkondensat kontaktiert wird, und wobei für das Trägergas eine am Trägergasabzug (13) am Ausgang der Kondensatkammer (2) angeschlossene Rückführleitung (39) zur Rückführung des Trägergases zum Trägergaseinlaß (8) an der Vorwärmkammer (9) vorgesehen ist.

6. Vorrichtung nach Anspruch 5,
**dadurch gekennzeichnet,**
daß eine für die Flüssigkeit saugfähige Oberfläche (6) eingesetzt ist.

7. Vorrichtung nach Anspruch 6,
**dadurch gekennzeichnet,**
daß die Oberfläche (6) eine faserartige Struktur aufweist.

8. Vorrichtung nach einem der vorhergehenden Ansprüche 5 bis 7,
**dadurch gekennzeichnet,**
daß die Oberfläche (6) von saugfähigem und/oder eine faserartige Struktur aufweisenden Material bedeckt ist.

9. Vorrichtung nach Anspruch 8,
**dadurch gekennzeichnet,**
daß das Material mittels Solarenergie aufheizbar ist.

10. Vorrichtung nach einem der vorhergehenden Ansprüche 5 bis 9,
**dadurch gekennzeichnet,**
daß die Oberfläche (6) von mehreren benachbart und parallel zueinander angeordneten Verdunstungsflächen gebildet ist, die zwischen sich Strömungsräume (10) für das Trägergas (7) aufweisen.

11. Vorrichtung nach einem der Ansprüche 5 bis 10,
**dadurch gekennzeichnet,**
daß ein Teil der Flüssigkeit nach Durchströmen der Kühlflächen (12) zur Vorkühlung des Trägergases (7) vor dessen Eintritt in die Kondensatkammer (2) dient.

12. Vorrichtung nach einem der vorhergehenden Ansprüche 5 bis 11
**dadurch gekennzeichnet**
daß in der Rückführleitung (39) ein von einem Teil der abgeführten Flüssigkeit durchströmter Wärmetauscher (38) eingesetzt ist.

13. Verwendung des Verfahrens nach einem der Ansprüche 1 bis 4 und der Vorrichtung nach einem der Ansprüche 5 bis 12 zur Gewinnung entsalzten Wassers.

14. Verwendung nach Anspruch 13,
**dadurch gekennzeichnet**
daß aus Salzwasser Trinkwasser gewonnen wird.

## Claims

1. Process for the thermal separation of components of a liquid which are volatile to a different degree by heating the liquid until the more readily volatile component is evaporated,
- wherein component vapour formed upon evaporation is transported by means of a carrier gas which had been brought to the thermal state of the component vapour prior to absorption of the component vapour by heating the carrier gas by means of solar energy,
- wherein for subsequent condensation and formation of component condensate, the component vapour contained in the carrier gas is precipitated in contact with component condensate and cooling surfaces, which are cooled by the liquid,
- wherein after cooling of the cooling surfaces, a part quantity of the liquid is distributed on a surface absorbing the part quantity which has been heated using solar energy to evaporate the more readily volatile liquid component, and
- wherein the carrier gas is circulated.

2. Process according to Claim 1, characterised in that the part quantity of the liquid is evaporated on a surface absorbing the liquid.

3. Process according to Claim 2, characterised in that the surface has a fibre-like structure.

4. Process according to one of claims 1, 2 or 3, characterised in that the carrier gas is heated to component vapour temperature prior to entering the evaporation chamber.

5. Device for the thermal separation of components of a liquid which are volatile to a different degree by heating the liquid until the more readily volatile component evaporates, with a vapour outlet (11) for component vapour formed upon evaporation and with a condensate chamber (2) connected downstream for storing component condensate obtained from the component vapour, wherein to obtain the component condensate cooling surfaces (12), which are cooled by the liquid, of which a part quantity is subsequently evaporated, are arranged in the condensate chamber (2), and wherein a surface (6), which may be heated by using solar energy and is arranged in an evaporation chamber (1) with carrier gas (7) flowing through it, is provided for absorption of the part quantity of the liquid, whereby a preheating chamber (9) with carrier gas flowing through it and heated by solar energy is connected upstream of the evaporation chamber (1), wherein the vapour outlet (11) opening in the condensate chamber (2) in such a way that the component vapour contained in the carrier gas comes into contact with the cooling surfaces (12) and with component condensate formed on the cooling surfaces, and wherein a return pipe (39) connected to the carrier gas outlet (13) at the exit of the condensate chamber (2) is provided for the carrier gas for return of the carrier gas to the carrier gas inlet (8) at the preheating chamber (9).

6. Device according to Claim 5, characterised in that a surface (6) which is absorbent for the liquid is used.

7. Device according to Claim 6, characterised in that the surface (6) has a fibre-like structure.

8. Device according to one of the preceding Claims 5 to 7, characterised in that the surface (6) is covered by a material which is absorbent and/or has a fibre-like structure.

9. Device according to Claim 8, characterised in that the material may be heated by means of solar energy.

10. Device according to one of the preceding Claims 5 to 9, characterised in that the surface (6) is formed by several evaporation surfaces arranged adjacent and parallel to one another which have flow chambers (10) between them for the carrier gas (7).

11. Device according to one of the preceding Claims 5 to 10. characterised in that after flowing through the cooling surfaces (12), a part of the liquid serves to pre-cool the carrier gas (7) prior to its entry into the condensate chamber (2).

12. Device according to one of the preceding Claims 5 to 11, characterised in that a heat exchanger (38), through which a part of the discharged liquid flows, is inserted in the return pipe (39).

13. Use of the process according to one of Claims 1 to 4 and the device according to one of Claims 5 to 12 to obtain desalinated water.

14. Use according to Claim 13, characterised in that drinking water is obtained from salt water.

## Revendications

1. Procédé de séparation thermique de constituants d'un liquide de volatilités différentes par chauffage du liquide jusqu'à évaporation des constituants les plus volatils.
- la vapeur des constituants, formée lors de l'évaporation étant évacuée au moyen d'un gaz porteur qui, avant d'absorber de la vapeur du constituant, a été porté à l'état thermique de la vapeur du constituant, par chauffage du gaz porteur au moyen d'énergie solaire,
- la vapeur du constituant contenue dans le gaz porteur étant. pour la condensation ultérieure et la formation du produit condensé du constituant, mise en contact avec le produit condensé du constituant et des surfaces de refroidissement, qui sont refroidies par le liquide,
- une quantité partielle du liquide étant répartie sur une surface chauffée en tirant partie de l'énergie solaire, surface qui reçoit la quantité partielle en vue d'évaporer les constituants du liquide qui sont les plus volatils, et
- le gaz porteur circulant en circuit fermé.

2. Procédé suivant la revendication 1,
caractérisé,
en ce qu'il consiste à évaporer la quantité partielle du liquide sur une surface aspirant le liquide.

3. Procédé suivant la revendication 2,
caractérisé,
en ce que la surface a une structure fibreuse.

4. Procédé suivant l'une des revendications 1, 2 ou 3,
caractérisé,
en ce qu'il consiste à porter le gaz porteur à la température d'évaporation du constituant avant l'entrée dans la chambre d'évaporation.

5. Dispositif de séparation thermique de constituants d'un liquide de volatilités différentes, par chauffage du liquide jusqu'à évaporation des constituants les plus volatils, comprenant une évacuation (11) de vapeur pour la vapeur de constituant formée lors de l'évaporation et une chambre (2) de produit condensé en aval pour emmagasiner du produit condensé du constituant obtenu à partir de la vapeur de constituant, des surfaces (12) de refroidissement étant prévues pour obtenir le produit condensé du constituant dans la chambre (2) du produit condensée et, étant refroidie par le liquide dont une quantité partielle est ensuite évaporée et, pour l'absorption de la quantité partielle du liquide, il est prévu une surface (6), chauffée en utilisant de l'énergie solaire, qui est disposée pour le transport de la vapeur cu constituant dans une chambre (1) d'évaporation, dans laquelle passe du gaz (7) porteur, une chambre (9) de préchauffage, chauffée par de l'énergie solaire et dans laquelle passe du gaz porteur. étant montée en amont de la chambre (1) d'évaporation, l'évacuation (11) de vapeur débouchant dans la chambre (2) de produit condensé de façon que la vapeur de constituant contenue dans le gaz porteur soit mise en contact avec les surfaces (12) de refroidissement et avec le produit condensé du constituant formé sur les surfaces de refroidissement, et un conduit (39) de retour destiné au gaz porteur et raccordé au conduit (13) d'évacuation du gaz porteur à la sortie de la chambre (2) de produit condensé étant prévu pour retourner le gaz porteur à l'entrée (8) de gaz porteur de la chambre (9) de préchauffage.

6. Dispositif suivant la revendication 5,
caractérisé,
en ce qu'il est utilisé une surface (6) apte à aspirer du liquide.

7. Procédé suivant la revendication 6,
caractérisé,
en ce que la surface (6) a une structure fibreuse.

8. Procédé suivant l'une des revendications 5 à 7 précédentes,
caractérisé,
en ce que la surface (6) est recouverte de matériau apte à aspirer et/ou présentant une structure fibreuse.

9. Procédé suivant la revendication 8,
caractérisé,
en ce que le matériau peut être chauffé par de l'énergie solaire

10. Procédé suivant l'une des revendications 5 à 9 précédentes,
caractérisé,
en ce que la surface (6) est formée de plusieurs surfaces d'évaporation voisines et disposées parallèlement les unes aux autres, qui comportent entre elles des chambres (10) d'écoulement du gaz (7) porteur.

11. Procédé suivant l'une des revendications 5 à 10 précédentes,
caractérisé,
en ce qu'une partie du liquide sert. après avoir avoir passé sur les surfaces (12) de refroidissement. à prérefroidir le gaz porteur (7) avant son entrée dans la chambre (2) de produit condensé.

12. Procédé suivant l'une des revendications 5 à 11 précédentes,
caractérisé,
en ce qu'il est monté dans le conduit (39) de retour un échangeur (38) de chaleur, dans lequel passe une partie du liquide évacué.

13. Utilisation du procédé suivant l'une des revendications 1 à 4 et dispositif suivant l'une des revendications 5 à 12, pour obtenir de l'eau dessalée

14. Utilisation suivant la revendication 13,
caractérisé,
en ce que de l'eau potable est obtenue à partir de l'eau salée.
